# EUROPÄISCHE PATENTANMELDUNG

(11) **EP 1 816 032 A1**
(43) Veröffentlichungstag der Anmeldung: **08.08.2007**
(21) Anmeldenummer: 07000480.9
(22) Anmeldetag: 11.01.2007
(51) Int. Cl.: B60R 5/04

(54) **Fahrzeugladeraum mit einer Laderaumabdeckung**

(30) Priorität: 01.02.2006 DE 102006005673
(71) Anmelder: BOS GmbH & Co. KG, 73760 Ostfildern (DE)
(72) Erfinder: Walter, Herbert, 73061 Ebersbach (DE); Stark, Wolfgang, 73770 Denkendorf (DE); Schlecht, Werner P., 71665 Vaihingen/ Enz Aurich (DE)
(74) Vertreter: Patentanwälte Ruff, Wilhelm, Beier, Dauster & Partner

(57) **Zusammenfassung**

Ein Kraftfahrzeug-Laderaum (1) mit einer Laderaumabdeckung, die ein auf einer fahrzeugfesten gehaltenen Wickelwelle auf- und abwickelbar gelagertes, flexibles Flächengebilde (6) aufweist, das mittels eines formstabilen Auszugprofiles (7) in Führungsprofilierungen (14) geführt ist, die fahrzeugfest an gegenüberliegenden Seiten des Laderaumes angeordnet sind, ist bekannt.

Erfindungsgemäß ist beidseitig des Laderaumes jeweils ein Blendprofil (12,12a) vorgesehen, das jeweils einen Seitenrand (9,9a) des Flächengebildes (6,6a) oberhalb einer Oberseite des Flächengebildes (6,6a) in dessen etwa horizontal ausgezogener Funktionsstellung überdeckt.

## Beschreibung

Die Erfindung betrifft einen Kraftfahrzeug-Laderaum mit einer Laderaumabdeckung, die ein auf einer fahrzeugfest gehaltenen Wickelwelle auf- und abwickelbar gelagertes, flexibles Flächengebilde aufweist, das mittels eines an einem vorderen Stirnendbereich des Flächengebildes angeordneten, formstabilen Auszugprofiles in Führungsprofilierungen geführt ist, die fahrzeugfest an gegenüberliegenden Seiten des Laderaumes angeordnet sind.

Ein derartiger Kraftfahrzeug-Laderaum ist für Personenkraftwagen wie Kombi-Personenkraftwagen, Vans oder SUV's allgemein bekannt. Derartige Laderäume weisen üblicherweise eine Laderaumabdeckung auf, die ein auf einer Wickelwelle auf- und abwickelbar gehaltenes flexibles Flächengebilde umfasst. Das Flächengebilde ist als blickdichtes Textilgebilde ausgeführt. Die Wickelwelle ist in einem Kassettengehäuse drehbar gelagert, das etwa auf Höhe einer Fahrzeugbrüstung in Fahrzeugquerrichtung ausgerichtet und unmittelbar hinter einer Rückenlehnenanordnung einer Fondsitzbank angeordnet ist. Das Textilgebilde weist an seinem in Auszugrichtung vorderen Stirnrand ein formstabiles Auszugprofil auf, das üblicherweise mit einem formstabilen Konturteil versehen ist. Das Auszugprofil erstreckt sich über die gesamte Breite des Textilgebildes und ragt mit seinen gegenüberliegenden Stirnenden zu beiden Seiten über das Textilgebilde hinaus. Mittels der Stirnenden ist das Auszugprofil in fahrzeugseitigen Führungsprofilierungen in Fahrzeuglängsrichtung verschiebbar gehalten. Die Führungsprofilierungen sind an gegenüberliegenden Seitenwandungen des Laderaumes angeordnet. Während einer Auszug- oder Einzugbewegung des Textilgebildes wird das Auszugprofil mit seinen gegenüberliegenden Stirnenden in den Führungsprofilierungen geführt. Im heckseitigen Endbereich des Laderaumes sind den Führungsprofilierungen Rastmulden zugeordnet, um ein Blockieren des Auszugprofiles in der ausgezogenen Position des Textilgebildes zu ermöglichen. Zwischen den Seitenrändern des Textilgebildes und den Führungsprofilierungen bzw. den Seitenbrüstungen ist in ausgezogener Position des Textilgebildes ein schmaler Spalt vorhanden, durch den hindurch von außerhalb des Kraftfahrzeugs unter Umständen auf den Boden des Laderaumes geblickt werden kann.

Aufgabe der Erfindung ist es, einen Kraftfahrzeug-Laderaum der eingangs genannten Art zu schaffen, der einen verbesserten Blickschutz für auf dem Laderaumboden befindliches Ladegut ermöglicht.

Diese Aufgabe wird dadurch gelöst, dass beidseitig des Laderaumes jeweils ein Blendprofil vorgesehen ist, das jeweils einen Seitenrand des Flächengebildes oberhalb einer Oberseite des Flächengebildes in dessen etwa horizontal ausgezogener Funktionsstellung überdeckt. Dadurch wird auch im Seitenrandbereich des Flächengebildes in ausgezogener Funktionsstellung ein sicherer Blickschutz für den unterhalb der Laderaumabdeckung befindlichen Laderaum erzielt. Da die Seitenränder des Flächengebildes durch das jeweilige Blendprofil auf den gegenüberliegenden Seiten des Laderaumes überdeckt werden, sind weder die Führungsprofilierungen an den Seitenwandungen noch die dem Flächengebilde zugeordneten Führungsmittel wie das Auszugprofil oder ähnliches sichtbar, sondern vielmehr verdeckt. Dadurch ergibt sich bei ausgezogenem Flächengebilde ein besonders einheitlicher und ansprechender optischer Eindruck des Laderaumes. Das Blendprofil kann in Form und Gestaltung auf die Innenraumverkleidung des Kraftfahrzeugs und/oder auf die Gestaltung und Materialwahl des Flächengebildes abgestimmt sein. Vorzugsweise ist die Wickelwelle in einem Kassettengehäuse drehbar gelagert, das laderaumfest angeordnet ist. In dem Kassettengehäuse kann auch eine weitere Wickelwelle für ein Trennnetz zur etwa vertikalen Laderaumabtrennung gegenüber dem Fahrgastraum angeordnet sein.

In Ausgestaltung der Erfindung sind den Seitenrändern des Flächengebildes im Bereich einer Unterseite Spannmittel zugeordnet, die das Flächengebilde quer zu seiner Wickelrichtung straffen. Dadurch wird verhindert, dass das Flächengebilde in ausgezogener Funktionsstellung in der Mitte durchhängt. Für die ausgezogene Funktionsstellung ergibt sich so ein ebener optischer Eindruck, ohne dass das Flächengebilde Querversteifungsmittel, die sich über die Auszuglänge des Flächengebildes wiederholen, benötigt.

In weiterer Ausgestaltung der Erfindung weisen die Spannmittel jeweils einen an der Unterseite des Flächengebildes im Bereich des jeweiligen Seitenrandes angebrachten Profilstreifen auf, der jeweils mit einem Stützabschnitt versehen ist, der quer zur Wickelrichtung zu einer Laderaummitte hin an einem Stegabschnitt der jeweiligen Führungsprofilierung formschlüssig abgestützt ist. Dies ist eine besonders einfache mechanische Lösung, die funktionssicher gestaltet ist.

In weiterer Ausgestaltung der Erfindung weist jeder Profilstreifen einen z-artigen Querschnitt auf. Dabei sind die beiden Z-Schenkel des Profilstreifens vorzugsweise etwa parallel zueinander ausgerichtet. Der eine Z-Schenkel ist flächig an der Unterseite des jeweiligen Seitenrandes des Flächengebildes angebracht. Der andere Z-Schenkel verläuft vorzugsweise in parallelem Abstand zu der Unterseite des Flächengebildes. Die beiden Z-Schenkel sind durch einen Querabschnitt miteinander verbunden, der vorzugsweise in einem stumpfen Winkel zu beiden Z-Schenkeln ausgerichtet ist. Dadurch überlagern die beiden Z-Schenkel einander nicht wie bei einem üblichen Z in Querrichtung, sondern sind mittels des Querabschnittes in Querrichtung des Profilstreifens zueinander beabstandet. Durch die flächige Anbringung des einen Z-Schenkels jedes Profilstreifens an der Unterseite des jeweiligen Seitenrandes des Flächengebildes verbleibt dieser Seitenrand eben, so dass der Abstand des Blendprofiles zu dem jeweiligen Seitenrandbereich sehr gering gewählt sein kann. Insbesondere kann das Blendprofil parallel zu dem Seitenrandbereich horizontal und eben ausgeführt sein.

In weiterer Ausgestaltung der Erfindung ragt das Blendprofil zur Laderaummitte hin in den Laderaum hinein. Vorzugsweise ist das jeweilige Blendprofil auf jeder Laderaumseite parallel zu dem ausgezogenen Flächengebilde ausgerichtet.

In weiterer Ausgestaltung der Erfindung ist das Blendprofil einstückiger Teil der Führungsprofilierung, die insbesondere mit der Seitenbrüstung einstückig verbunden ist. Dadurch ist es möglich, die Führungsprofilierung kostengünstig als Kunststoffteil herzustellen und mehrere Funktionen in der Führungsprofilierung zu integrieren.

Das flexible Flächengebilde weist eine Breite in Fahrzeugquerrichtung auf, die größer als eine lichte Breite des Laderaumes - ebenfalls in Fahrzeugquerrichtung gesehen - ist. Unter der lichten Breite des Laderaumes ist der Abstand der gegenüberliegenden Seitenwandungen zueinander zu verstehen. Durch diese Ausgestaltung taucht das flexible Flächengebilde zwangsläufig bei einem Ausziehvorgang unter die Blendprofile, so dass die Seitenränder des Flächengebildes durch die Blendprofile überdeckt sind.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung einen Ausschnitt eines Personenkraftwagens im Bereich eines heckseitigen Laderaumes gemäß einem Ausführungsbeispiel der Erfindung,
- Fig. 2: einen Querschnitt durch eine Seitenführung eines Flächengebildes der Laderaumabdeckung nach Fig. 1 und
- Fig. 3: eine weitere Laderaumabdeckung für eine weitere Ausführungsform eines erfindungsgemäßen Laderaumes.

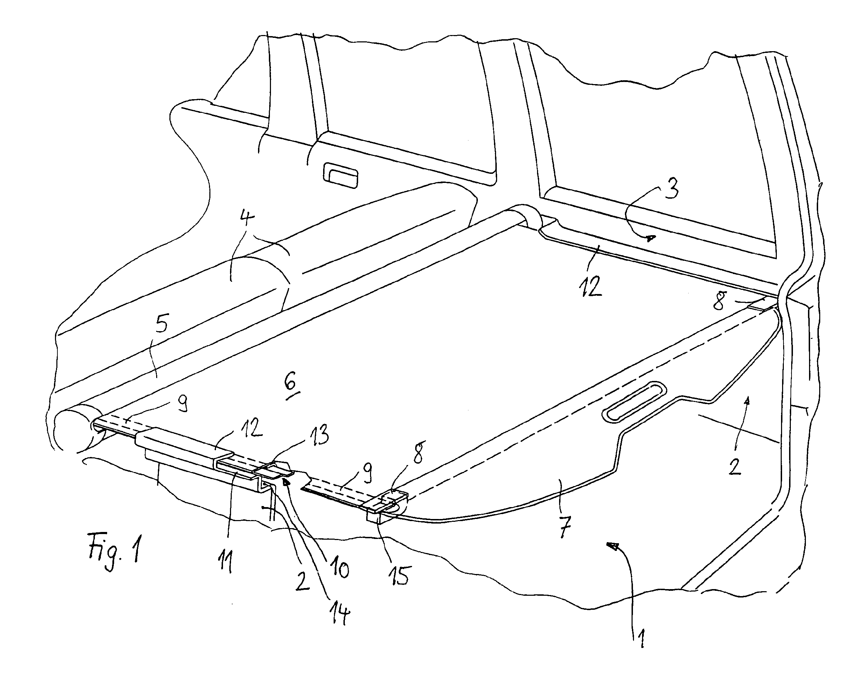

Ein Personenkraftwagen in Form einen Kombi-Personenkraftwagens, eines Vans oder eines SUVs weist gemäß Fig. 1 einen Fahrzeuginnenraum auf, der heckseitig mit einem Laderaum 1 versehen ist. Der Laderaum 1 weist einen nicht näher bezeichneten Laderaumboden auf. In Fahrzeuglängsrichtung nach vorne ist der Laderaum 1 durch eine Rückenlehnenanordnung 4 einer ein- oder mehrteiligen Fondsitzbank begrenzt. Die Fondsitzbank ist Teil eines Fahrgastraumes des Kraftfahrzeugs. Der Laderaum 1 ist zu den gegenüberliegenden Fahrzeugseiten durch jeweils eine Seitenwandung 2 begrenzt. Die Seitenwandung 2 ist vorzugsweise durch Verkleidungsteile gebildet, die mit einer Rohbaukarosserie fest verbunden sind. Die Verkleidungsteile sind formstabil ausgeführt und decken in grundsätzlich bekannter Weise eine fahrzeuginnenseitige Rohbaukarosserie ab.

Die Seitenwandungen 2 gehen unterhalb einer Fahrzeugbordkante, die zumindest ungefähr durch Unterkanten von Seitenfensterrahmen des Fahrzeugs gebildet ist, in jeweils eine Seitenbrüstung 3 über, die den Übergang der Laderaumseitenwandungen 2 zur Fahrzeugbordkante bildet.

Auf Höhe der Seitenbrüstungen 3 ist ein Kassettengehäuse 5 vorgesehen, das unmittelbar hinter der Rückenlehnenanordnung 4 der Fondsitzbank angeordnet ist und sich in Fahrzeugquerrichtung erstreckt. Das Kassettengehäuse 5 ist laderaumfest gehalten. Hierzu sind in den Seitenbrüstungen 3 oder im Bereich der Rückseite der Rückenlehnenanordnung 4 entsprechende Halterungen vorgesehen, mit denen das Kassettengehäuse 5 lösbar verbunden ist. Das Kassettengehäuse 5 ist als Hohlkörper ausgeführt, in dem eine Wickelwelle drehbar gelagert ist. Die Wickelwelle erstreckt sich in Längsrichtung des Kassettengehäuses 5 und damit ebenfalls in Fahrzeugquerrichtung über die Länge des Kassettengehäuses 5. Auf der Wickelwelle ist ein flexibles Flächengebilde 6 in Form einer blickdichten textilen Abdeckung auf- und abwickelbar gehalten. In Aufwickelrichtung ist die Wickelwelle durch eine Wickelfederanordnung drehmomentbeaufschlagt, so dass das Flächengebilde 6 durch die Federkraft der Wickelfederanordnung in Aufwickelrichtung selbsttätig auf die Wickelwelle aufgerollt wird.

Das Flächengebilde 6 weist an seinem in Abwickelrichtung vorderen Stirnendbereich ein formstabiles Auszugprofil 7, vorliegend in Form eines formstabilen Konturteiles auf, das sich über die gesamte Breite des flexiblen Flächengebildes 6 erstreckt. Das formstabile Auszugprofil 7 ist an seinen gegenüberliegenden Stirnendbereichen unterhalb der Ebene des Flächengebildes 6 mit jeweils einem Gleitstein 15 versehen, der über einen Auszugweg des Auszugprofiles 7 und damit des flexiblen Flächengebildes 6 in jeweils einer korrespondierenden Führungsprofilierung 14 im Bereich der Seitenbrüstung 3 geführt ist. Die Führungsprofilierung 14 auf jeder Fahrzeugseite schließt als zur Laderaummitte hin offene Nut oder als entsprechend offenes Hohlprofil oben an die jeweilige Seitenwandung 2 an. Beim dargestellten Ausführungsbeispiel ist die Führungsprofilierung 14 einstückig an die die Seitenwandung 2 bildende Kunststoffschale angeformt. Die beiden Gleitsteine 15 auf gegenüberliegenden Stirnseiten des Auszugprofiles 7 sind somit über den gesamten Auszugweg des Auszugprofiles 7 von seiner aufgewickelten Ruheposition bis in die heckseitige Endposition in den Führungsprofilierungen 14 in Fahrzeuglängsrichtung verschiebbar geführt.

In Fig. 1 ist die ausgezogene Endposition des Auszugprofiles 7 und damit des Flächengebildes 6 dargestellt. Die Gleitsteine 15 sind in dieser Endposition durch nicht näher dargestellte Sicherungsmittel mechanisch blockiert, um ein unbeabsichtigtes Einrollen des Flächengebildes 6 im Fahrbetrieb zu vermeiden. Die Sicherungsmittel können durch entsprechende Raststellungen in den Führungsprofilierungen 14 oder auch durch separate Riegel- oder Sperrelemente gebildet sein, die die Gleitsteine 15 und damit das Auszugprofil 7 in der ausgezogenen Endposition formschlüssig blockieren. Die Riegel- oder Sperrelemente werden in ihre Freigabeposition überführt, sobald das Flächengebilde 6 aus der Endposition freigegeben werden soll.

Das Flächengebilde 6 ist mit seinen gegenüberliegenden Seitenrandbereichen 9 in Fahrzeugquerrichtung über die Gleitsteine 15 hinaus erstreckt, wie anhand der Fig. 1 und 2 erkennbar ist. Die Seitenrandbereiche 9 sind innerhalb von Führungsschlitzen 11 der Seitenbrüstungen 3 geführt. Eine Oberseite der Seitenrandbereiche 9 des flexiblen Flächengebildes 6 wird durch jeweils ein Blendprofil 12 überdeckt, das zur Laderaummitte hin erstreckt ist.

Um die Seitenrandbereiche 9 des Flächengebildes 6, die oberhalb der Gleitsteine 15 angeordnet sind, zu straffen, ist zum einen auf Höhe des Auszugprofiles 7 jeweils eine Stützlasche 8 vorgesehen, die formstabil ausgeführt ist und den jeweiligen Seitenrandbereich 9 einfasst. Zum anderen sind im Bereich der Unterseite der Seitenrandbereiche 9 Profilstreifen 10 angebracht, die eine ausreichende Eigensteifigkeit in Fahrzeugquerrichtung aufweisen. In Längsrichtung des Flächengebildes 6 sind die Profilstreifen 10 derart biegsam ausgeführt, dass sie gemeinsam mit dem Flächengebilde 6 auf die Wickelwelle aufgewickelt werden können. Jeder Profilstreifen 10 weist gemäß Fig. 2 einen ersten Streifenabschnitt 10a auf, der flächig an der Unterseite des Seitenrandbereiches 9 des flexiblen Flächengebildes 6 angebracht, insbesondere verklebt oder vernäht ist. Jeder Profilstreifen 10 erstreckt sich wenigstens über die Länge des flexiblen Flächengebildes 6, die in der ausgezogenen Endposition des flexiblen Flächengebildes 6 dem Abstand des Kassettengehäuses 5 zu dem Auszugprofil 7 entspricht. Der Profilstreifen 10 ist im Querschnitt etwa z-artig ausgeführt, wie anhand der Fig. 2 erkennbar ist. Ein an den Streifenabschnitt 10a anschließender Streifenabschnitt 10b erstreckt sich schräg nach unten und zur Laderaummitte hin. An diesen mittleren Streifenabschnitt 10b schließt ein weiterer Streifenabschnitt 10c an, der als Stützabschnitt für den Profilstreifen 10 dient. Der Stützabschnitt 10c ist etwa parallel zu dem Streifenabschnitt 10a ausgerichtet und erstreckt sich ausgehend von dem mittleren Streifenabschnitt 10b in entgegengesetzter Richtung zu dem Streifenabschnitt 10a.

Der Führungsschlitz 11 zur Aufnahme des Seitenrandbereiches 9 des flexiblen Flächengebildes 6 und zur Führung der jeweiligen Stützlasche 8 des Auszugprofiles 7 ist unterhalb des Flächengebildes 6 mit einem Stegabschnitt 13 versehen, der in Fahrzeughochrichtung ausgerichtet ist und eine formschlüssige Stütze gegen eine Bewegung des Profilstreifens 10 zur Laderaummitte hin bildet. Der Stegabschnitt 13 ist zusätzlich mit einem Führungsabschnitt 13a versehen, der den Stützabschnitt 10c des Profilstreifens 10 von oben her überlappt, so dass er zwischen dem Profilstreifen 10 und der Unterseite des Flächengebildes 6 erstreckt ist. Der Stegabschnitt 13 und der Führungsabschnitt 13a bilden gemeinsam mit einem Boden des Führungsschlitzes 11 eine nut- oder schlitzartige Führung für den Stützabschnitt 10c des Profilstreifens 10. Da jeder Profilstreifen 10, der an der Unterseite des jeweiligen Seitenrandbereiches 9 des Flächengebildes 6 angeordnet ist, eine ausreichende Eigensteifigkeit aufweist, und da jeder Profilstreifen 10 sich zur Laderaummitte hin an dem Stegabschnitt 13 des Führungsschlitzes 11 abstützen kann, wird das Flächengebilde 6 über die Länge seines Auszugweges bis in die Seitenrandbereiche 9 hin in Fahrzeugquerrichtung und damit in Querrichtung des Flächengebildes 6 gestrafft geführt. Zudem sind die Seitenrandbereiche 9 des flexiblen Flächengebildes 6 durch die Blendprofile 12 überdeckt, so dass sich bei ausgezogenem Flächengebilde 6 gemäß Fig. 1 eine optisch ansprechende, ebene Laderaumabdeckung für den Laderaum 1 ergibt, die den Laderaum 1 etwa horizontal und damit etwa parallel zu einem Laderaumboden auf Höhe der Seitenbrüstungen 3 überdeckt.

Die Führungsprofilierung 14 im Bereich jeder Seitenbrüstung ist unterhalb des Führungsschlitzes 11 angeordnet, wie anhand der Fig. 1 und 2 erkennbar ist. Wie anhand der Fig. 2 zu sehen ist, sind die Führungsprofilierung 14 und der Führungsschlitz 10 einschließlich des Stegabschnittes 13 und Führungsabschnittes 13a einstückiger Teil der Seitenwandung 2. Das Blendprofil 12, kann wie anhand der Fig. 1 erkennbar ist, ebenfalls einstückiger Teil des die Seitenwandung 2 bildenden Kunststoffteiles sein. Es ist aber auch möglich, Seitenwandung 2 und Seitenbrüstung 3 aus getrennten Teilen herzustellen. Für diesen Fall kann das Blendprofil 12 einstückiger Teil der Seitenbrüstung 3 sein. Beim Ausführungsbeispiel gemäß Fig. 1 sind die Seitenwandung 2 und die Seitenbrüstung 3 insgesamt als einstückiges Verkleidungsteil ausgeführt.

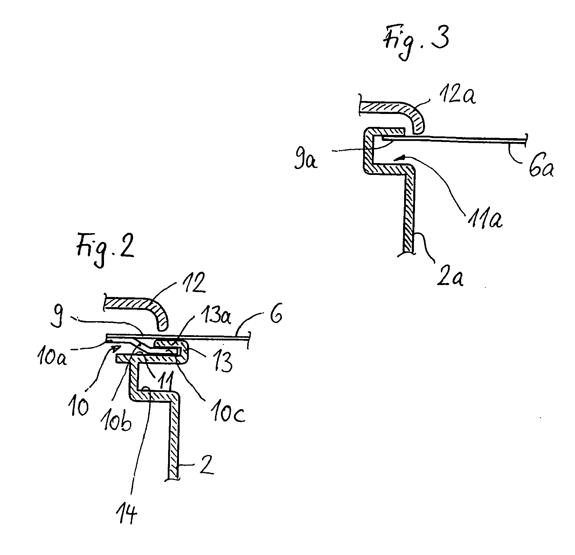

Das Ausführungsbeispiel gemäß Fig. 3 entspricht bis auf die nachfolgend beschriebenen Unterschiede dem zuvor anhand der Fig. 1 und 2 beschriebenen Ausführungsbeispiel. Zur Vermeidung von Wiederholungen wird diesbezüglich daher auf die Offenbarung zu den Fig. 1 und 2 verwiesen. Wesentlicher Unterschied bei der Ausführungsform nach Fig. 3 ist es, dass das flexible Flächengebilde 9a an seinen gegenüberliegenden Seitenrandbereichen 9a nicht durch entsprechende Profilstreifen gestrafft ist, sondern vielmehr lediglich im Bereich seines Auszugprofiles bis zu den Seitenrandbereichen 9a hin gestützt ist. Diese Stützung erfolgt bei der Ausführungsform nach Fig. 3 derart, wie es durch die Stützlaschen 8 des Auszugprofiles 7 gemäß Fig. 1 vorgesehen ist. Dabei kann ein entsprechendes Stützprofil, das als Auszugprofil dient, in einfacher Weise bis in die Seitenrandbereiche 9a des Flächengebildes 6a in Fahrzeugquerrichtung fortgesetzt sein und sich in Führungsprofilierungen 11 a der Seitenbrüstung bzw. der Seitenwandung 2a gleitend abstützen. Sowohl die Führungsprofilierung 11a als auch der Seitenrandbereich 9a sind auf jeder Seite des Laderaumes 1 durch ein Blendprofil 12a überdeckt, das sich oberhalb der Oberseite des Flächengebildes 6a zur Laderaummitte hin erstreckt. Hierdurch ergibt sich in gleicher Weise wie bei der Ausführungsform nach Fig. 2 ein optisch ansprechender, optisch geschlossener Übergang zwischen der Seitenbrüstung 3 bzw. der Seitenwandung 2a zur Laderaummitte hin, wenn das Flächengebilde 6a sich in seiner ausgezogenen Endposition befindet. Denn dann geht die Oberfläche des Blendprofiles 12a in die Oberseite des Flächengebildes 6a über, ohne dass ein Spalt zwischen den Seitenrandbereichen 9a des Flächengebildes 6a und der Seitenbrüstung bzw. der Seitenwandung erkennbar ist. Das Blendprofil 12a ist im Querschnitt gesehen zu seinem zu dem Flächengebilde 6a gerichteten Seitenrand hin gekrümmt, wie Fig. 3 zu entnehmen ist. Gleiches gilt für das Blendprofil 12 nach Fig. 2.

## Patentansprüche

1. Kraftfahrzeug-Laderaum mit einer Laderaumabdeckung, die ein auf einer fahrzeugfest gehaltenen Wickelwelle auf- und abwickelbar gelagertes, flexibles Flächengebilde aufweist, das mittels eines an einem vorderen Stirnendbereich des Flächengebildes angeordneten, formstabilen Auszugprofiles in Führungsprofilierungen geführt ist, die fahrzeugfest an gegenüberliegenden Seiten des Laderaumes angeordnet sind, **dadurch gekennzeichnet, dass** beidseitig des Laderaumes jeweils ein Blendprofil (12, 12a) vorgesehen ist, das jeweils einen Seitenrand (9, 9a) des Flächengebildes (6, 6a) oberhalb einer Oberseite des Flächengebildes (6, 6a) in dessen etwa horizontal ausgezogener Funktionsstellung überdeckt.

2. Kraftfahrzeug-Laderaum nach Anspruch 1, **dadurch gekennzeichnet, dass** den Seitenrändern (9) im Bereich einer Unterseite Spannmittel (10, 13) zugeordnet sind, die das Flächengebilde (6) quer zu seiner Wickelrichtung straffen.

3. Kraftfahrzeug-Laderaum nach Anspruch 2, **dadurch gekennzeichnet, dass** die Spannmittel jeweils einen an der Unterseite des Flächengebildes (6) im Bereich des jeweiligen Seitenrandes (9) angebrachten Profilstreifen (10) aufweisen, der jeweils mit einem Stützabschnitt (10c) versehen ist, der quer zur Wickelrichtung zu einer Laderaummitte hin an einem Stegabschnitt (13) der jeweiligen Führungsprofilierung (11) formschlüssig abgestützt ist.

4. Kraftfahrzeug-Laderaum nach Anspruch 3, **dadurch gekennzeichnet, dass** jeder Profilstreifen (10) einen z-artigen Querschnitt aufweist.

5. Kraftfahrzeug-Laderaum nach Anspruch 1, **dadurch gekennzeichnet, dass** das Blendprofil (12, 12a) zur Laderaummitte hin in den Laderaum hineinragt.

6. Kraftfahrzeug-Laderaum nach Anspruch 5, **dadurch gekennzeichnet, dass** das Blendprofil (12, 12a) einstückiger Teil der Führungsprofilierung (11, 11a) ist, die insbesondere mit der Seitenbrüstung einstückig verbunden ist.

7. Kraftfahrzeug-Laderaum nach Anspruch 1, **dadurch gekennzeichnet, dass** das flexible Flächengebilde eine Breite in Fahrzeugquerrichtung aufweist, die größer ist als eine lichte Breite des Laderaumes - ebenfalls in Fahrzeugquerrichtung gesehen.
